# EUROPÄISCHE PATENTSCHRIFT

(11) **EP 1 324 845 B1**
(45) Veröffentlichungstag und Bekanntmachung des Hinweises auf die Patenterteilung: **16.08.2006**
(21) Anmeldenummer: 01976030.5
(22) Anmeldetag: 12.09.2001
(51) Int. Cl.: B22D 11/16, B22D 46/00, B23Q 41/08, G05B 13/02

(54) **VERFAHREN ZUM BETREIBEN EINER ANLAGE DER GRUNDSTOFFINDUSTRIE**
METHOD FOR OPERATING AN INSTALLATION OF A PRIMARY INDUSTRY
PROCEDE PERMETTANT DE FAIRE FONCTIONNER UNE INSTALLATION DANS L'INDUSTRIE DES MATIERES PREMIERES

(30) Priorität: 25.09.2000 DE 10047381
(43) Veröffentlichungstag der Anmeldung: 09.07.2003
(73) Patentinhaber: SIEMENS AKTIENGESELLSCHAFT, 80333 München (DE)
(72) Erfinder: BÜRVENICH, Hans-Peter, 91056 Erlangen (DE); DACHTLER, Gerhard, 91083 Hagenau (DE); GLASS, Thomas, 40237 Düsseldorf (DE)
(86) Internationale Anmeldenummer: PCT/DE2001/003505
(87) Internationale Veröffentlichungsnummer: WO 2002/024380

(56) Entgegenhaltungen:
- WO-A-00/05014
- US-A- 4 958 292

## Beschreibung

Die Erfindung betrifft ein Verfahren zum Betreiben einer Anlage der Grundstoffindustrie, insbesondere einer Gießwalzanlage, mit einem Rechensystem, wobei mit der Anlage Produkte hergestellt werden, die verschiedenen Produktionsaufträgen zugeordnet sind, wobei ein Produktionsplan erstellt wird, der mehrere Verfahrensschritte aufweist.

Derartige Verfahren zum Betreiben von Anlagen der Grundstoffindustrie, insbesondere von Gießwalzanlagen, mit einem Rechensystem, wobei mit der Anlage Produkte hergestellt werden, die verschiedenen Produktionsaufträgen zugeordnet sind, wobei mit dem Rechensystem ein Produktionsplan erstellt wird, wie auch derartige Anlagen sind allgemein bekannt und vielfach in Betrieb.

Die bekannten Anlagen sind verfahrenstechnischen Restriktionen unterworfen, die sich beispielsweise aus Standzeiten von Teilen der Anlage ergeben. So ist z.B. die Aufteilung des Betriebes der Gießwalzanlage in einzelne Sequenzen eine Folge derartiger verfahrenstechnischer Restriktionen.

Bei Anlagen, in denen unterschiedliche Produktionsaufträge abgearbeitet werden, ergeben sich auftragsbedingte Restriktionen. Diese Restriktionen, wie z.B. in Gießwalzanlagen, sind z.B. eine erwünschte Stahlmarke oder eine erwünschte Dicke und/oder eine erwünschte Breite des jeweiligen Endproduktes.

Die verfahrenstechnischen und die auftragsbedingten Restriktionen führen bekannterweise dazu, dass es sehr schwierig ist, die Anlage optimal mit unterschiedlichen Produktionsaufträgen in einem sogenannten Produktionsablauf zu betreiben. Beispielsweise im Hinblick auf die Auslastung einer Anlage sind die verfahrenstechnischen und die auftragsbedingten Restriktionen einander nahezu entgegengerichtet, so dass es bisher kaum möglich ist, diesbezüglich einen optimalen Betrieb mit unterschiedlichen Aufträgen einer Anlage zu erreichen.

Neben einer manuellen Planung, die nur in stark begrenztem Umfang möglich ist, ist ein Verfahren und eine Vorrichtung gemäß der internationalen Anmeldung WO 00/05014 A1 bekannt. Hier wird durch die Verwendung von einem genetischen Algorithmus eine Abfolge von unterschiedlichen Produktionsaufträgen in einer Anlage erzeugt. Diesem Verfahren stehen jedoch lange Bearbeitungszeiten und begrenzte Optimierungsmöglichkeiten entgegen.

Aufgabe der Erfindung ist es, ein Verfahren zum Betreiben einer Anlage, insbesondere einer Gießwalzanlage, zu schaffen, das einen optimierten Betrieb ermöglicht.

Die Aufgabe wird erfindungsgemäß durch ein Verfahren gemäß Anspruch 1 gelöst. Vorteilhafte Weiterbildungen sind in den abhängigen Ansprüchen angegeben.

Die eingangs dargestellte Problematik wird nunmehr nicht wie beim Stand der Technik durch manuelle Vorgabe oder durch den Einsatz von einem genetischen Algorithmus, sondern erfindungsgemäß in Form von Verfahrensschritten der Auftragsauswahl, der Vorplanung, der Planerstellung sowie einer Optimierung gelöst. Vorteilhaft ist dabei insbesondere, dass diese Verfahrenschritte eine wesentlich kürzere Bearbeitungsdauer beanspruchen, sowie eine verbesserte Planungsqualität, die sich auf das verwendete Verfahren zurückführen lässt, erzielen.

In der Auftragsauswahl wird ein Produktionsplan erstellt, der sich aus einer Mehrzahl von Produktionsaufträgen zusammensetzt.

Erfindungsgemäß erfolgt die Auswahl der Produktionsaufträge, welche in den Produktionsplan aufgenommen werden, in Abhängigkeit von wirtschaftlichen und technischen Kriterien. Solche wirtschaftliche und technische Kriterien können unter anderem Liefertermine der Fertigstellung des Produktes, Qualitätsangaben sowie technische Angaben, wie z.B. bei Gießwalzanlagen über Breite und Dicke des Endproduktes, sein.

Ziel der Vorplanung ist es, eine Reihenfolge der im Produktionsplan hinterlegten Produktionsaufträge unter Berücksichtigung möglichst vieler Restriktionen zu erstellen. Bei der Vorplanung wird der bei dem Übergang von einem Produktionsauftrag zu dem nächsten Produktionsauftrag entstehende verfahrenstechnische Aufwand berechnet. Es wird eine Reihenfolge der ausgewählten Produktionsaufträge bestimmt, bei der der auftretende Aufwand möglichst gering ist. Die Ermittlung dieses Aufwands wird in Abhängigkeit von verfahrenstechnischen Restriktionen, den eine Anlage unterliegt, ermittelt.

Aufgabe der Planerstellung ist es, aus der Vorgabe der Vorplanung einen ablauffähigen Produktionsplan zu erstellen. Die vorgegebene Reihenfolge, welche in der Vorplanung ermittelt wurde, bleibt in der Planerstellung bestehen, jedoch werden, um verfahrenstechnische Restriktionen der Anlage einhalten zu können weitere Produkte eingefügt. Bei der Planerstellung werden alle Restriktionen, die bei einer Anlage bestehen, bei Gießwalzwerken z.B. die Walzenlaufleistung, berücksichtigt.

Erfindungsgemäß werden zusätzlichen Produkte aus Produktionsaufträgen ausgewählt, die zuvor bei der Auftragsauswahl nicht ausgewählt wurden.

Sofern keine Produkte mehr aus bestehenden Produktionsaufträgen vorhanden sind, werden erfindungsgemäß die zusätzlichen Produkte aus von der Produktion unabhängigen Aufträgen ermittelt. Als von der Produktion unabhängige Aufträge werden gesehen:
a) Produkte von Produktionsaufträgen, die erwartet werden.
b) Produkte von immer wieder d.h. kontinuierlich auftretenden Produktionsaufträgen.
c) Produkte, die keinem der zuvor genannten Aufträge zugehören.

Erfindungsgemäß werden bei der Optimierung Stellen in der Planerstellung identifiziert, die weiteres Optimierungspotential aufweisen. Im Wesentlichen sind dies alle Stellen in einem Produktionsplan, an denen zusätzliche Produkte von unabhängigen Produktionsaufträgen eingeplant worden sind. Um diese Produkte zu vermeiden, wird die ursprüngliche Auftragsauswahl so beeinflusst, dass hier auf eine Verbesserung gehofft werden kann. Für diese neue Auftragsauswahl wird die Vorplanung und die Planerstellung erneut ausgeführt. Anschließend wird das Ergebnis nach der Optimierung mit dem Ausgangsergebnis verglichen. Ist das optimierte Ergebnis, unter dem in der Vorplanung und Planerstellung ermittelten Aufwand, günstiger, wird dieses Ergebnis als neuer Produktionsplan verwendet. Ein alternatives Vorgehen ist, dass in dem Schritt der Optimierung auch lokale Verschlechterungen von einzelnen Anlagenteilen in Kauf genommen werden dürfen, um zu einer besseren Gesamtlösung zu gelangen.

Eine vorteilhafte Ausgestaltung der Erfindung ist, dass bei der Optimierung der Planerstellung auch ein Löschen von mindestens einem Produktionsauftrag berücksichtigt ist.

Vorteile einer solchen Vorgehensweise (mit Auftragsauswahl, Vorplanung, Planerstellung und Optimierung) ist, dass sämtliche Restriktionen, die sich auf die Abfolge zweier Produkte bezieht, direkt durch die Vorplanung behandelt werden können.

Damit ist die Planung, für mögliche Anforderungen durch weitere Restriktionen, in hohem Maße flexibel.

Ein weiterer Vorteil einer solchen Vorgehensweise ist, dass sie für verschiedene Ausprägungen der Produktionsplanung, wie z.B. der regulären Planung, der Notfallplanung und auch der Restplanung, anwendbar ist.

Als reguläre Planung ist ein Produktionsplan zu sehen, welcher über einen vordefinierten Zeitraum erstellt wird, und bei dem sowohl Durchsatzrestriktionen als auch verfahrenstechnische Restriktionen und Qualitätsrestriktionen berücksichtigt werden.

Bei der Notfallplanung werden zusätzlich zu den Restriktionen der regulären Planung noch weitere Restriktionen berücksichtigt. Treten technische Störungen in der Anlage auf oder können Teile der Anlage die technischen Vorgaben nicht erfüllen, so wird eine Umplanung mit eventuell eingeschränkten Ressourcen oder geänderten Randbedingungen vorgenommen.

Bei der Restplanung wird eine Reihenfolge von Kundenaufträgen für einen Produktionsplan vorgegeben, d.h. die Schritte der Auftragsauswahl und der Vorplanung werden manuell durchgeführt. Die weiteren Schritte, wie in der Planerstellung und in der Optimierung beschrieben, werden durchgeführt.

Im Folgenden sind Anlagenrestriktionen, insbesondere bei Gießwalzanlagen, aufgeführt, welche bei der Vorplanung und bei der Planerstellung berücksichtigt werden:
a) Stahlerzeugung: Schmelzengewichte, Schrottmengen je Schmelze, Bearbeitungszeiten,
b) Strangguss: Kokillendimensionen, Gießgeschwindigkeit, Rahmengruppen, Breitenverstellgeschwindigkeit, Rüstzeiten, Schrottmengen je Gießsequenz,
c) Tunnelofen: Bearbeitungszeiten
d) Warmwalzstraße: Walzenlaufleistungen an Wärmbändern, Dickensprungrestriktionen, Breitenrestriktionen, Zwischenwalzenwechsel,
e) Synchronisationsrestriktionen: Breiten- und Dickensynchronisation bei mehreren Produktionslinien, die durch Restriktionen an der Walzstraße bestimmt sind, Restriktionen der Rüstzeiten am Strangguss,
f) Auftragsrestriktionen: Einplanungsgrenze bezüglich der Walzenlaufleistung, Planheitseinschränkungen, Breitenverstellung,
g) einzuplanende Stillstandszeiten der einzelnen Aggregate.

Auf diese Weise können alle Anlagen, bei denen beim Übergang von verschiedenen Prozessabläufen Restriktionen bestehen, beschrieben und bewertet werden. Abhängig von dieser Bewertung wird nun der verfahrenstechnisch günstigste Produktionsplan erstellt.

Die Erfindung sowie weitere Vorteile und Details werden im Folgenden anhand von schematisch dargestellten Ausführungsbeispielen in der Zeichnung näher erläutert. Es zeigen:
- FIG 1: Ein Blockdiagramm eines Einstrang-Kompaktwalzwerkes,
- FIG 2: ein Blockdiagramm eines Zweistrang-Kompaktwalzwerkes,
- FIG 3: ein Blockdiagramm eines Kompaktwalzwerkes mit zweifacher Gießanlage,
- FIG 4: ein Ablaufdiagramm eines Ausführungsbeispiels einer erfindungsgemäßen Anlage,
- FIG 5: ein Beispiel für eine verfahrenstechnische Aufwandsbeurteilung der Vorplanung bei einem Gießwalzwerk

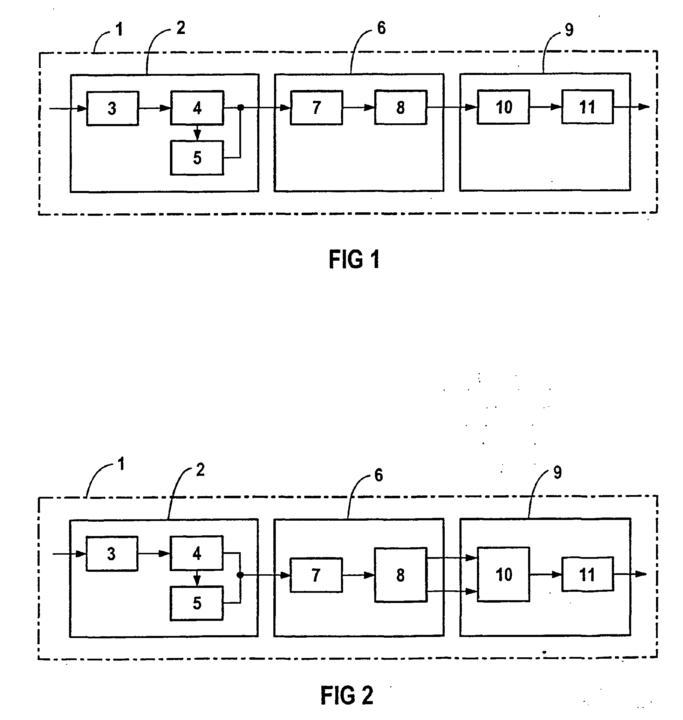

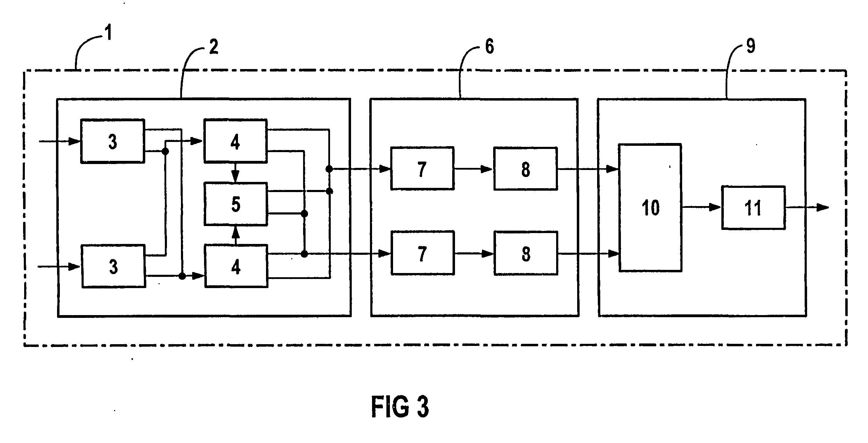

In den FIG 1 bis 3 ist eine Anlage der Grundstoffindustrie (Gießwalzanlage) 1 in verschiedenen Ausprägungsformen dargestellt. Die Gießwalzanlage 1 besteht aus einem Anlagenbereich der Stahlwerkserzeugung, dem Stahlwerk 2, der Gießanlage 6 und der Walzanlage 9. In dem Stahlwerk 2 ist mindestens ein Elektroofen 3 vorgesehen, der mit Schrott beschickt wird. In dem Elektroofen 3 wird der Schrott geschmolzen. Dem Elektroofen 3 ist jeweils ein Pfannenofen 4 nachgeordnet. Dem Pfannenofen 4 ist eine Vakuumentgasung 5 nachgeordnet, mit der der Stahl in Abhängigkeit von einer erwünschten Stahlmarke entgast wird. Danach folgt eine Gießanlage 6, mit der der Stahl zu Brammen gegossen wird. Die Gießanlage 6 ist hier in Form von einem Drehturm 7 und einem nachgeordneten Strangguss 8 dargestellt. Je nach technischer Auslegung unterscheidet man bei dem Strangguss zwischen einer einsträngigen bzw. zweisträngigen Ausführung. Der Gießanlage 6 ist eine Walzanlage 9 nachgeordnet. Die in dem Strangguss 8 aus Stahl erzeugten Brammen werden anschließend in den Ausgleichsofen 10 geführt. Innerhalb des Ausgleichsofens 10 können diese Brammen zumindest kurzzeitig gepuffert werden und es ist auch ein Vorziehen einzelner Brammen möglich. Nach dem Ausgleichsofen 10 werden die Brammen der Warmwalzstraße 11 zugeführt. In der Warmwalzstraße 11 werden die Brammen mehrfach durch Walzenpaare hindurchgeführt und dadurch in ihrer Dicke reduziert. Der Warmwalzstraße 11 folgt häufig eine Kaltwalzanlage, mit der die Brammen einer weiteren Dickenreduktion unterzogen werden. Diese Kaltwalzanlage ist in den Ausführungsbeispielen FIG 1 bis FIG 3 nicht dargestellt.

In den FIG 1 bis 3 sind, wie bereits erwähnt, verschiedene Ausprägungen von Gießwalzanlagen dargestellt. Je nach Ausprägung einer solchen Gießwalzanlage sind verschiedene Arbeitsabläufe möglich oder notwendig.

Die beschriebenen Anlagenteile einer Gießwalzanlage 1 besitzen jeweils bestimmte Standzeiten. So muss z. B. der Strangguss 8 einer Gießanlage 6 nach einer bestimmten Menge von durchgeführtem flüssigen Stahl gereinigt, angewärmt und gegebenenfalls auch teilweise erneuert werden. Bei der Warmwalzstraße 11 einer Walzanlage 9 müssen nach einer bestimmten gewalzten Längen von durchgeführten Brammen die Walzen erneuert werden. Dieser Vorgang wird als Walzenwechsel bezeichnet.

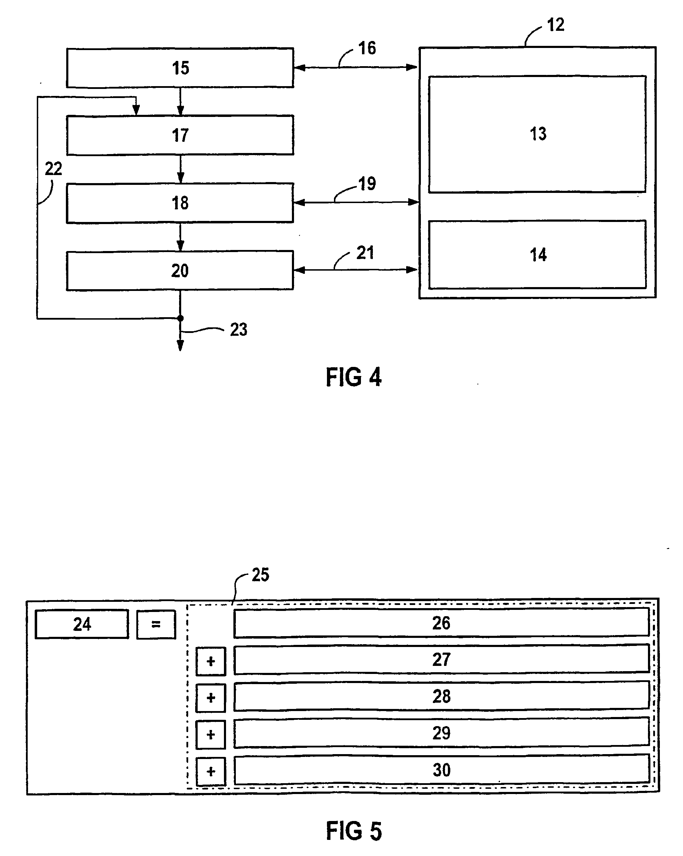

FIG 4 zeigt ein Ablaufdiagramm eines Ausführungsbeispiels einer erfindungsgemäßen Anlage. Der Auftragsspeicher 12 setzt sich aus bestehenden Produktionsaufträgen 13 und unabhängigen Produktionsaufträgen 14 zusammen. Unter bestehende Produktionsaufträgen 13 sind alle Produktionsaufträge zu sehen, welchen eine Bestellung von Dritten zugrunde liegt. Unabhängige Produktionsaufträge 14 sind Aufträge, deren keine Bestellung von Dritten zugrunde liegen. In der Auftragsauswahl 15 wird abhängig von wirtschaftlichen und technischen Kriterien, wie z.B. von Lieferterminen und/oder von einzuhaltenden Qualitätsvorschriften, eine Menge von Produktionsaufträgen aus dem Auftragsspeicher 12 der bestehenden Produktionsaufträge 13 ausgewählt. Die Auswahl der Produktionsaufträge sowie die Bereitstellung der Produktionsaufträge erfolgt über die Verbindung 16. Die ausgewählte Menge von Produktionsaufträgen wird der Vorplanung 17 übergeben. In der Vorplanung 17 wird eine Reihenfolge der im Produktionsplan hinterlegten Produktionsaufträge unter Berücksichtigung möglichst vieler Restriktionen erstellt. Hierbei wird der bei dem Übergang von einem Produktionsauftrag zu dem nächsten Produktionsauftrag entstehende verfahrenstechnische Aufwand berechnet. In der Vorplanung 17 wird eine Reihenfolge der ausgewählten Produktionsaufträge bestimmt, bei der, der auftretenden verfahrenstechnische Aufwand möglichst gering ist. Die von der Vorplanung 17 ermittelte Reihenfolge der Produktionsaufträge wird der Planerstellung 18 übergeben. Aufgabe der Planerstellung 18 ist es, aus der Vorgabe der Vorplanung 17 einen ablauffähigen Produktionsplan zu erstellen. Die vorgegebene Reihenfolge, welche in der Vorplanung 17 ermittelt wurde, bleibt in der Planerstellung 18 bestehen, jedoch werden, um verfahrenstechnische Restriktionen der Anlage einhalten zu können, eventuell weitere Produkte eingefügt. Diese zusätzlichen Produkte werden als Füllprodukte bezeichnet. Vorzugsweise werden diese Füllprodukte aus bestehenden Produktionsaufträgen 13 ausgesucht. Werden in dem Auftragsspeicher 12 keine geeigneten bestehenden Produktionsaufträge 13 identifiziert, so werden die Füllprodukte aus den unabhängigen Produktionsaufträgen 14 ermittelt. Die Auswahl der Füllprodukte erfolgt über die Verbindung 19. Der in der Planerstellung 18 erstellte ablauffähige Produktplan wird an die Optimierung 20 übergeben. Bei der Optimierung 20 werden Stellen im Produktionsplan identifiziert, die weiteres verfahrenstechnisches Optimierungspotential aufweisen. Im Wesentlichen sind dies alle Stellen in einem Produktionsplan, an denen zusätzliche Produkte, so genannte Füllprodukte, zusätzlich aufgenommen wurden. Um diese Füllprodukte zu vermeiden, wird die ursprüngliche Auftragsauswahl so beeinflusst, dass hier auf eine Verbesserung gehofft werden kann. Diese Optimierung erfolgt über die Verbindung 21 auf den Auftragsspeicher 12. Hierbei werden über die Verbindung 21 neue bestehende Produktionsaufträge 13 ausgewählt oder auch bereits ausgewählte Aufträge wieder gelöscht. Anschließend wird die neue Auswahl über die Verbindung 22 der Vorplanung 17 übergeben, und die Schritte der Vorplanung 17 und der Planerstellung 18 wiederholt. Danach wird das Ergebnis der Planerstellung 18 der Optimierung 19 übergeben und mit dem Ausgangsergebnis vor der ersten Optimierung verglichen. Ist das optimierte Ergebnis, unter dem in der Vorplanung und Planerstellung ermittelten Aufwand, günstiger, wird dieses Ergebnis als neuer Produktionsplan verwendet. Wird in der Optimierung 20 keine Verbesserung mehr festgestellt, so wird der erstellte Produktionsplan über die Verbindung 23 für die Produktion frei gegeben.

FIG 5 zeigt ein Beispiel einer verfahrenstechnischen Aufwandsbeurteilung der Vorplanung 17 bei einer Gießwalzanlage 1. Der Aufwand (a1,a2) 24, wobei a1 als Produktionsauftrag 1 und a2 als Produktionsauftrag 2 bezeichnet werden, berechnet sich aus einer Menge von Aufwendungen 26, 27, 28, 20 und 30, welche verfahrenstechnische Restriktionen darstellen. 26 zeigt den Aufwand der durch eine Dickenänderung bei dem Übergang von Produktionsauftrag 1 auf Produktionsauftrag 2 entsteht. 27 zeigt den Aufwand der durch den Einsatz von Füllprodukten entsteht. Diese Füllprodukte sind notwendig, um einen zulässigen Dickensprung zu erhalten. 28 zeigt den Aufwand der durch einen Walzenwechsel entsteht. Ein Walzenwechsel kann abhängig von Walzenlaufleistungen bestimmt werden. 29 zeigt den Aufwand der durch den Einsatz einer neuen Schmelze entsteht. Der Einsatz einer neuen Schmelze wird dann notwendig, wenn in Abhängigkeit von unterschiedlichen Produkten verschiedene Stahlmarken gefordert werden. 30 zeigt den Aufwand der bei der Überschreitung von Planheitsgrenzwerten entsteht.

Mit Hilfe des beschriebenen Verfahrens ist es damit möglich, schnell und einfach den verfahrenstechnischen Aufwand bei dem Übergang von einem Produktionsauftrag 1 auf einen Produktionsauftrag 2 zu bestimmen. Je nach Anlagenvariante ist eine schnelle und effektive Anpassung zur Berechnung des verfahrenstechnischen Aufwandes, durch Hinzufügen bzw. Löschen eines verfahrenstechnischen Aufwandes, welcher in Abhängigkeit von Anlagenrestriktionen ermittelt wird, möglich.

## Patentansprüche

1. Verfahren zum Betreiben einer Anlage (1) der Grundstoffindustrie, insbesondere einer Gießwalzanlage, mit einem Rechensystem, wobei in der Anlage (1) Produkte hergestellt werden, die verschiedenen Produktionsaufträgen zugeordnet sind, wobei ein Produktionsplan mit mehreren Verfahrensschritten erstellt wird, wobei das Verfahren folgende Verfahrensschritte aufweist:
a) Erstellen eines Produktionsplans durch Auswählen einer Mehrzahl von Produktionsaufträgen aus einem Auftragsspeicher.
b) Erstellen einer Reihenfolge der im Produktionsplan hinterlegten, ausgewählten Produktionsaufträge in einer Vorplanung (17) unter Berücksichtigung von verfahrenstechnischen Restriktionen, denen die Anlage (1) und deren Produktionsaufträge unterliegen, wobei der bei dem Übergang von einem Produktionsauftrag entstehende verfahrenstechnische Aufwand zu dem nächsten Produktionsauftrag aus einer Menge von Aufwendungen (26, 27, 28, 39, 30), welche verfahrenstechnische Restriktionen darstellen, berechnet wird;
**gekennzeichnet durch** die folgenden Verfahrensschritte:
c) Erstellen eines ablauffähigen Produktionsplans unter Zuhilfenahme der in der Vorplanung (17) erstellten Reihenfolge, wobei die vorgegebene, in der Vorplanung ermittelte Reihenfolge in der Planerstellung bestehen bleibt,
in dem die verfahrenstechnischen Restriktionen, denen eine Anlage unterliegt, berücksichtigt werden, wobei
in den ablauffähigen Produktionsplan mindestens ein Produkt von mindestens einem Produktionsauftrag eingefügt wird, wobei
diese zusätzlichen Produkte aus Produktionsaufträgen ausgewählt werden, die zuvor bei der Auftragsauswahl nicht ausgewählt wurden, wobei
die zusätzlichen Produkte, sofern keine Produkte mehr aus bestehenden Produktionsaufträgen vorhanden sind, aus von der Produktion unabhängigen Aufträgen ermittelt werden, wobei
es sich bei den Produkten, welche aus einer Produktion von einem unabhängigen Auftrag ermittelt werden, um Produkte handelt, die in zu erwartenden oder in kontinuierlich auftretenden Produktionsaufträgen enthalten sind.
d) Optimierung des erstellten ablauffähigen Produktionsplans, wobei Optimierungsstellen, d.h. Stellen, in Produktionsplan, an denen zusätzliche Produkte von einem unabhängigen Auftrag aufgenommen wurden, identifiziert werden, wobei die ursprüngliche Aüftragsauswahl modifiziert wird und wobei mindestens ein weiterer Durchlauf der Verfahrensschritte b) bis d) durchgeführt wird.

2. Verfahren nach Anspruch 1,
**dadurch gekennzeichnet,**
**dass** bei einer Optimierung das Löschen von mindestens einem Produktionsauftrag in einem Produktionsplan, berücksichtigt ist.

3. Verfahren nach einen der vorhergehenden Ansprüche,
**dadurch gekennzeichnet,**
**dass** eine Notfallplanung durchgeführt wird.

4. Verfahren nach einen der vorhergehenden Ansprüche,
**dadurch gekennzeichnet,**
**dass** eine Restplanung durchgeführt wird.

## Claims

1. Method for operating a plant (1) of the primary industry, particularly a continuous casting and rolling plant, using a computer system, wherein in the plant (1) products are produced which are assigned to different production orders, wherein a production plan comprising a plurality of method steps is generated, the method comprising the following method steps:
a) generation of a production plan by selection of a plurality of production orders from an order memory.
b) generation of a sequence of selected production orders, filed in the production plan, in a pre-planning (17), with due regard to process-related restrictions to which the plant (1) and its production orders are subject, the process-related cost generated in the transition from one production order to the next production order being calculated from a number of expenditures (26, 27, 28, 29, 30), which constitute process-related restrictions;
**characterized by** the following method steps:
c) generation of an executable production plan with the aid of the sequence generated in the pre-planning (17), the specified sequence determined in the pre-planning persisting in the planning,
in which the process-related restrictions to which a plant is subject are taken into account,
wherein at least one product of at least one production order is inserted in the executable production plan,
wherein these additional products are selected from production orders which were not previously selected in the order selection,
wherein the additional products, insofar as no more products are available from existing production orders, are determined from production-independent orders,
wherein the products which are determined from a production of an independent order constitute products which are contained in expected or recurring production orders.
d) optimization of the generated executable production plan, wherein optimization points are identified, i.e. points in the production plan at which additional products from an independent order have been included, wherein the original order selection is modified, and wherein at least one further run-through of method steps b) to d) is conducted.

2. Method according to Claim 1, **characterized in that**, in an optimization, the deletion of at least one production order is taken into account in a production plan.

3. Method according to one of the preceding claims, **characterized in that** an emergency planning is conducted.

4. Method according to one of the preceding claims, **characterized in that** a residual planning is conducted.

## Revendications

1. Procédé pour faire fonctionner une installation (1) dans l'industrie primaire, en particulier une installation de laminage de coulée continue, équipé d'un système de calcul, dans lequel des produits affectés à diverses commandes de production sont fabriqués dans l'installation (1) et un plan de production à plusieurs étapes de procédé est élaboré, les étapes du procédé étant les suivantes :
a) élaborer un plan de production en sélectionnant une multiplicité de commandes de production dans une mémoire à commandes,
b) élaborer une succession des commandes de production sélectionnées et enregistrées dans le plan de production dans un plan préliminaire (17) en tenant compte de restrictions technologiques auxquelles sont soumises l'installation (1) et ses commandes de production, on calcule alors à partir d'une quantité de dépenses (26, 27, 28, 29, 30) qui représentent des restrictions technologiques la dépense technologique liée au passage d'une commande de production à la commande de production suivante,
**caractérisé par** les étapes de procédé suivantes
c) élaborer un plan de production exécutable en ayant recours à la succession établie dans le plan préliminaire (17)
en maintenant la succession prédéfinie, déterminée dans le plan préliminaire quand on élabore le plan du fait qu'on prend en compte les restrictions technologiques auxquelles est soumise une installation,
en introduisant au moins un produit provenant d'au moins une commande de production dans le plan de production exécutable,
en sélectionnant ces produits supplémentaires parmi des commandes de production, qui n'ont pas été sélectionnées auparavant lors de la sélection de commande,
en déterminant les produits supplémentaires à partir de commandes indépendantes de la production, dans la mesure où il n'y a plus de produits provenant de commandes de production disponibles,
les produits déterminés à partir d'une production provenant d'une commande indépendante étant des produits qui se trouvent dans des commandes de production prévisibles ou passées régulièrement,
d) optimiser le plan de production exécutable qui a été élaboré,
en identifiant des points d'optimisation, c'est-à-dire dans le plan de production des points auxquels des produits supplémentaires provenant d'une commande indépendante ont été inclus,
en modifiant la sélection originelle des commandes et
en parcourant au moins une autre fois les étapes de procédé b) à d).

2. Procédé selon la revendication 1, **caractérisé en ce que**, lors d'une optimisation, on prend en compte qu'au moins une commande de production est effacée dans un plan de production.

3. Procédé selon l'une des revendications précédentes, **caractérisé en ce qu'**on réalise un plan d'urgence.

4. Procédé selon l'une des revendications précédentes, **caractérisé en ce qu'**on réalise un plan des reliquats.
